# EUROPEAN PATENT APPLICATION

(11) **EP 4 721 582 A1**
(43) Date of publication of application: **08.04.2026**
(21) Application number: 24815449.4
(22) Date of filing: 27.05.2024
(51) Int. Cl.: A23L 27/00, A21D 2/14, A21D 2/36, A21D 13/00, A21D 13/80, A23D 7/00, A23D 7/005, A23L 7/10, A23L 35/00

(54) **FLAVOR IMPROVING AGENT**

(30) Priority: 30.05.2023 JP 2023088761
(71) Applicant: ADEKA CORPORATION, Arakawa-ku Tokyo 116-8554 (JP)
(72) Inventor: ABE, Sayaka, Tokyo 116-8554 (JP); MORITA, Ryo, Tokyo 116-8554 (JP); KIDO, Hiroki, Tokyo 116-8554 (JP); KURIHASHI, Taiko, Tokyo 116-8554 (JP)
(74) Representative: Hoffmann Eitle
(86) International application number: PCT/JP2024/019402
(87) International publication number: WO 2024/247966

(57) **Abstract**

An object of the present invention is to improve the richness of a wide range of foods and drinks, including plant-based foods. Provided is a taste improving agent containing olive oil so as to be 1 to 15 parts by mass with respect to 1 part by mass of a brewing by-product. The brewing by-product is preferably a brewing by-product of alcoholic drinks. The olive oil is preferably unrefined olive oil. The content of an unsaponifiable matter is preferably 0.2 to 3.5% by mass. The taste improving agent preferably contains a plant milk. Provided is a food or drink containing olive oil so as to be 1 to 15 parts by mass with respect to 1 part by mass of a brewing by-product. The food or drink is preferably a plant-based food. Provided is a method for improving flavor of a food or drink, the method including a step of including a brewing by-product and olive oil in a food or drink.

## Description

### TECHNICAL FIELD

The present invention relates to a taste improving agent that can improve the richness of foods and drinks.

### BACKGROUND ART

Plant-based foods, which have been attracting attention in recent years, refer to foods and drinks produced without animal ingredients, and are generally produced by replacing animal ingredients in previously known foods and drinks with plant ingredients or processed products from plant ingredients.

Examples of plant-based foods include meat substitutes produced using plant oils and fats or plant proteins such as soybeans instead of animal oils and fats or meat, and bakery foods produced using margarine or shortening instead of butter.

Plant-based foods are attracting attention around the world because they do not contain animal ingredients, making them attractive foods not only to those who follow a particular religion, but also to those who are health conscious and interested in environmental issues. However, it is known that when foods and drinks that have been produced using animal ingredients are produced with only plant ingredients, richness (which refers to the persistence and breadth of flavor that defines the characteristics of foods and drinks) is likely to be lost.

This problem has been sometimes addressed by addition of flavors or changes in textures (for example, viscosity adjustment), but in many cases, the addition of flavors may result in, for example, a sharp rise in the top taste or a lingering aftertaste in the last taste, which may spoil the flavor or make the flavor unnatural, and richness may not be sufficiently improved. In addition, there has been a problem in that changes in textures make taste expression or oral sensation likely to be different from those of the original foods and drinks.

For this reason, methods to improve the richness of plant-based foods by methods other than improvement by the addition of flavors or changes in the textures of foods and drinks are being considered.

For example, Patent Literature 1 discloses that a taste improving agent containing sulfurol and hydroxymethylfurfural for meat substitutes and the like can impart a meaty taste. In addition, Patent Literature 2 discloses that a solid fat-substitute composition characterized by containing heat-coagulable β-1,3-glucan, an oil or fat, and a calcium salt can enhance the sense of oil and fat of foods.

On the other hand, it is known that when previously known foods and drinks are made into plant-based foods, they are likely to have relatively inferior tastes due to characteristic tastes derived from plant ingredients such as legumes that are frequently used in the production of plant-based foods. For example, Patent Literature 3 discloses that a taste improving agent for plant protein-containing foods containing acetaldehyde as an active ingredient can mask the unpleasant odor of the plant protein and improve the taste of plant protein-containing foods.

### RELATED ART REFERENCE

### Patent Literature

Patent Literature 1: Japanese Patent No. 7223898
Patent Literature 2: Japanese Patent Application Laid-open No. 2021-078395
Patent Literature 3: Japanese Patent Application Laid-open No. 2021-108642

### SUMMARY OF INVENTION

### PROBLEM TO BE SOLVED BY THE INVENTION

The methods for improving richness disclosed in Patent Literature 1 and Patent Literature 2 are limited in the type of target plant-based foods and lack versatility. The method of taste improvement in Patent Literature 3 cannot improve both taste and richness, and there is no disclosure of such.

In addition, there may be a need for improvement in richness also in foods and drinks other than plant-based foods. However, it is difficult to obtain a sufficient effect even when previously known methods for improving richness for plant-based foods are applied to foods and drinks other than plant-based foods, and in most cases, methods for improving richness applied to foods and drinks other than plant-based foods (for example, a method for increasing the content of animal ingredients such as dairy products) cannot be applied to plant-based foods.

Therefore, there is a need for a method to improve the richness of both of these foods and drinks. Thus, an object of the present invention is to improve the richness of a wide range of foods and drinks, including plant-based foods.

### MEANS FOR SOLVING PROBLEM

The inventors of the present invention have conducted intense studies to find that the above problem can be solved by using a taste improving agent that contains a brewing by-product and olive oil in a specific ratio.

The present invention is based on this finding and is described in detail below.
<1> A taste improving agent comprising olive oil in an amount of 1 to 15 parts by mass with respect to 1 part by mass of a brewing by-product.
<2> The taste improving agent according to <1>, wherein the brewing by-product is a brewing by-product of alcoholic drinks.
<3> The taste improving agent according to <1> or <2>, wherein the olive oil is unrefined olive oil.
<4> The taste improving agent according to any one of <1> to <3>, wherein a content of an unsaponifiable matter is 0.2 to 3.5% by mass.
<5> The taste improving agent according to any one of <1> to <4>, further comprising a plant milk.
<6> A food or drink comprising olive oil in an amount of 1 to 15 parts by mass with respect to 1 part by mass of a brewing by-product.
<7> The food or drink according to <6>, wherein the food or drink is a plant-based food.
<8> A method for improving flavor of a food or drink, the method comprising a step of including a brewing by-product and olive oil in a food or drink.

### EFFECT OF THE INVENTION

The present invention can improve the richness of a wide range of foods and drinks, including plant-based foods.

### EMBODIMENT FOR CARRYING OUT THE INVENTION

The following describes the present invention in detail.

### < Taste improving agent of Present Invention>

The taste improving agent of the present invention contains a brewing by-product and olive oil so as to be in a specific ratio, is used when foods and drinks are produced or consumed, and improves the taste of foods and drinks.

Specifically, by using the taste improving agent of the present invention, the richness of foods and drinks can be improved. In addition, the taste of foods and drinks can be improved by fulfilling a preferred form.

Note that in the following, the taste improving agent of the present invention may be referred to simply as the "improving agent of the present invention."

### <Brewing By-Product>

The brewing by-product contained in the improving agent of the present invention (hereinafter also referred to as the "brewing by-product used in the present invention" or the "brewing by-product of the present invention") will be described.

The "brewing by-product" in the present invention refers to filtered residues of foods and drinks and seasonings produced through a brewing step in which various food ingredients containing carbohydrates such as sugar and starch are fermented by microorganisms, and specific examples thereof include brewing lees of alcoholic drinks or fermented seasonings.

When the brewing by-product of the present invention is the brewing lees of alcoholic drinks, the type of the alcoholic drinks does not particularly matter, and one or two or more can be selected out of brewing lees of sake, shochu, sparkling brewed liquors such as beer, fruit wines, whiskeys, spirits, liqueurs, and the like. When the brewing by-product of the present invention is the brewing lees of fermented seasonings, the type of the fermented seasonings does not particularly matter, and one or two or more can be selected out of brewing lees of soy sauce, mirin(Japanese sweet cooking wine), and the like.

From the viewpoint of favorably obtaining the richness-improving effect of the improving agent of the present invention, the brewing by-product of the present invention is preferably selected from the brewing lees of alcoholic drinks, more preferably selected from the brewing lees of sake, shochu, and sparkling brewed liquors such as beer, and even more preferably selected from the brewing lees of sake and sparkling brewed liquors such as beer.

Note that when the brewing lees of sparkling brewed liquors such as beer are used as the brewing by-product of the present invention, coloration derived from the brewing lees may become noticeable depending on the type of foods and drinks produced using the improving agent of the present invention. Therefore, it is more preferable to use the brewing lees of sake as the brewing by-product of the present invention because it can prevent the coloration derived from the brewing lees from becoming noticeable. For example, in bread, the crumb portion thereof may turn brown in color. Therefore, the improving agent of the present invention, which uses the brewing lees of sake as the brewing by-product, is suitably used.

The brewing by-product used in the improving agent of the present invention may be a hydrous product in liquid, gel, paste, or other form, or a dried product in plate, flake, granule, powder, or other form, and one or two or more may be selected out of these as desired and used. From the viewpoint of obtaining the richness-improving effect with a smaller amount and the viewpoint of avoiding imparting a flavor derived from the brewing by-product to foods and drinks using the improving agent of the present invention, one or two or more are preferably selected out of a dried product in plate, flake, granule, powder, or other form and used. From the same viewpoint, the water content in the brewing by-product of the present invention is preferably 15% by mass or less or 10% by mass or less, and more preferably 8% by mass or less.

When the brewing by-product is a dried product in plate, flake, powder, or other form, the method of drying it is not limited to a particular method. For example, any previously known methods can be employed, including (1) a method of performing shaping and fluid bed drying with an extrusion granulator to produce a dried product, (2) a method of feeding into a rotating drum-shaped vacuum vessel and indirectly heating under reduced pressure to obtain a dried product, (3) a method of drying under reduced pressure on the surface of a drum dryer in a vacuum vessel to produce a dried product, (4) a method of adding alcohol and dehydrating with alcohol, and then evaporating the alcohol and drying, (5) a spray drying method, and (6) a vacuum belt drying method.

Examples of those that suitably satisfy the above conditions include "Shuko no Hana (registered trademark)" (sake lees, manufactured by Riken Vitamin Co., Ltd.), "Sake Lees Powder" (sake lees, manufactured by Imuraya Foods Co., Ltd.), and "EverPro (registered trademark)-BR" (beer lees, manufactured by EverGrain Ingredients, LLC).

### <Olive Oil>

The olive oil contained in the improving agent of the present invention (hereinafter also referred to as the "olive oil used in the present invention" or the "olive oil of the present invention") will be described.

The olive oil of the present invention is an oil or fat in which anything other than olive oil is not used (no other types of oils and fats are mixed in).

The olive oil used in the present invention may be olive oil that has been refined (hereinafter also referred to simply as refined olive oil), olive oil that has not been refined (hereinafter also referred to simply as unrefined olive oil), or a mixture of the refined olive oil and the unrefined olive oil. From the viewpoint that the effect of the present invention can be more suitably demonstrated, preferably only the unrefined olive oil is used.

The refined olive oil of the present invention refers to olive oil that has been separated from olive fruit by pressing, centrifugation, or other methods, the oil having undergone one or two or more refining treatments out of a degumming treatment, a deacidification treatment, a decolorization treatment, and a deodorization treatment. The unrefined olive oil of the present invention refers to olive oil that has been separated from olive fruit by pressing, centrifugation, or other methods, the oil having not undergone one or two or more out of the above refining treatments or having not undergone any of the refining treatments.

When the unrefined olive oil is used as the olive oil of the present invention, one that has not undergone any of the refining treatments of the degumming treatment, the deacidification treatment, the decolorization treatment, and the deodorization treatment is preferably used.

The degumming treatment referred to here refers to a step of hydrating and removing gummy matter, mainly phospholipids, contained in the oil. The deacidification treatment refers to a step of removing free fatty acids contained in the oil as a saponified content by treatment with alkaline water or the like. The decolorization treatment refers to a step of removing pigments contained in the oil by adsorbing them onto activated white clay or the like. The deodorization treatment refers to a step of removing odorous components contained in the oil by steam distillation under reduced pressure or the like.

When the unrefined olive oil is used as the olive oil of the present invention, commercially available products can also be used, or any of extra virgin olive oil, virgin olive oil, ordinary virgin olive oil, and lampante virgin olive oil determined and classified by a sensory evaluation can also be used. Note that this classification is based on the criteria of International Olive Council.

The olive oil used in the present invention is preferably one or two or more selected out of extra virgin olive oil and virgin olive oil, and more preferably extra virgin olive oil.

Note that when the olive oil used in the present invention is the unrefined olive oil, the acid value is preferably 2.0 or less, and when it is the refined olive oil, the acid value is preferably 0.6 or less.

The acid value is a value indicating the amount of potassium hydroxide (mg) required to neutralize free fatty acids in 1 g of oil or fat, and as the method for measuring the acid value, it can be measured using previously known methods. For example, it can be measured by the method described in "Standard Methods for the Analysis of Fats, Oils and Related Materials 2.3.1 (2013) established by Japan Oil Chemists' Society."

The iodine value of the olive oil of the present invention is preferably 70 or more, more preferably 73 or more or 75 or more, and the upper limit thereof is preferably 99 or less, and more preferably 96 or less or 94 or less. Thus, in one embodiment, the iodine value of the olive oil is preferably 70 to 99, and more preferably 73 to 96 or 75 to 94.

The iodine value refers to the amount of halogen absorbed in 100 g of oil or fat, expressed in grams of iodine. The iodine value of oil or fat can be measured, for example, in accordance with "2.3.4.1-1996 Iodine Value (Wijs-Cyclohexane Method) established by Japan Oil Chemists' Society."

When the olive oil used in the present invention satisfies these conditions, the effect of the present invention can be more suitably demonstrated.

### <Mass Ratio between Brewing By-Product and Olive Oil>

The improving agent of the present invention contains the brewing by-product and the olive oil so as to be 1 to 15 parts by mass of the olive oil with respect to 1 part by mass of the brewing by-product.

From the viewpoint of sufficiently obtaining the richness-improving effect of the improving agent of the present invention and avoiding the flavor of the improving agent of the present invention itself being imparted to foods and drinks to which the improving agent of the present invention is applied, the amount of the olive oil with respect to 1 part by mass of the brewing by-product is preferably 3 parts by mass or more, more preferably 5 parts by mass or more, and even more preferably 7 parts by mass or more. The upper limit is preferably 13 parts by mass or less, more preferably 11 parts by mass or less, and even more preferably 9 parts by mass or less. Thus, in one embodiment, the amount of the olive oil with respect to 1 part by mass of the brewing by-product is preferably 3 to 13 parts by mass, more preferably 5 to 11 parts by mass, and even more preferably 7 to 9 parts by mass. Note that the brewing by-product is considered in terms of solid content. Note that in the present invention, the solid content means the sum of components other than water, which are mainly proteins, carbohydrates, oils and fats, and ashes.

It is not clear why the richness of various foods and drinks can be improved by using the improving agent of the present invention, which is produced by containing the brewing by-product and the olive oil in the above mass ratio, but the inventors of the present invention consider the following.

That is, it is assumed that flavor components and odor components derived from the brewing by-product in the improving agent of the present invention (hereinafter referred to as the "flavor components and the like") are amino acids, proteins, and carbohydrates, while the flavor components and the like derived from the olive oil are sterols such as polyphenols and aldehydes, each having different compositions of the flavor components and the like. In this regard, it is considered that by containing the brewing by-product and the olive oil so as to satisfy the above ratio, the richness of various foods and drinks can be improved by, for example, reducing strange tastes such as acidity in foods and drinks to which the improving agent of the present invention is applied because the flavor components and the like have complementarily complex compositions.

### <About Content of Unsaponifiable Matter in Improving agent of Present Invention>

Unsaponifiable matter in the present invention refers to substances out of components contained in oils and fats that are not saponified by alkali, and specific examples thereof include hydrocarbons, higher alcohols, sterols, carbohydrates, dyes, vitamins, and resinous substances, which are characterized as being insoluble in water and soluble in ether, for example.

From the viewpoint of imparting and enhancing even better richness for a wide range of foods and drinks, including plant-based foods, the content of the unsaponifiable matter in the improving agent of the present invention is preferably 0.2% by mass or more, more preferably 0.35% by mass or more, even more preferably 0.6% by mass or more, and still even more preferably 0.85% by mass or more. The upper limit is preferably 3.5% by mass or less, more preferably 2.9% by mass or less, and even more preferably 2.3% by mass or less. Thus, in one embodiment, the content of the unsaponifiable matter is preferably 0.2 to 3.5% by mass, more preferably 0.35 to 3.5% by mass, even more preferably 0.6 to 2.9% by mass, and still even more preferably 0.85 to 2.3% by mass.

The content of the unsaponifiable matter of the present invention can be measured, for example, pursuant to Unsaponifiable Matter Measurement Method (2.4.8-1996) of Standard Methods for the Analysis of Fats, Oils and Related Materials by Japan Oil Chemists' Society.

As to the content of the unsaponifiable matter in the improving agent of the present invention, the content can be adjusted by any method so long as the unsaponifiable matter is contained in a range of 0.2 to 3.5% by mass, and can be selected as desired in accordance with the form of the improving agent of the present invention.

For example, (1) a method can be employed that adjusts the content of the unsaponifiable matter in the improving agent of the present invention using a commercially available unsaponifiable matter product (for example, "Riceterol Ester" manufactured by Tsuno Food Industrial Co., Ltd. or "Phytosterol S" manufactured by Tama Biochemical Co., Ltd.), (2) a method can be employed that adjusts the content of the unsaponifiable matter in the improving agent of the present invention using an oil or fat with a high content of the unsaponifiable matter, or (3) a method can be employed that adjusts the content by using both the commercially available unsaponifiable matter product and the oil or fat with a high content of the unsaponifiable matter.

Examples of the commercially available unsaponifiable matter product include those with an unsaponifiable matter content of usually 50% by mass or more. When such a commercially available unsaponifiable matter product is used, its content is not particularly limited so long as the improving agent of the present invention satisfies the unsaponifiable matter content described above.

Note that when the oil or fat with a high content of the unsaponifiable matter is used, the content of the unsaponifiable matter in the oil or fat is preferably 1.5% by mass or more or 1.6% by mass or more, more preferably 1.8% by mass or more, and even more preferably 2.0% by mass or more.

In the present invention, rice oil can be listed as an oil or fat that can be suitably used as the oil or fat with a high content of the unsaponifiable matter.

The rice oil suitably used in the improving agent of the present invention is an oil or fat obtained from rice bran, specifically a liquid oil produced by pressing or extracting rice bran as a raw material. Note that the rice oil also includes an oil or fat called rice germ oil, which contains a relatively large amount of γ-oryzanol as an unsaponifiable matter, and in the present invention, this rice germ oil is also treated as the rice oil.

### <About Plant Milk suitably used in Improving agent of Present Invention>

From the viewpoint of imparting and enhancing even better richness for a wide range of foods and drinks, including plant-based foods, the improving agent of the present invention preferably contains at least either plant milk or a plant-derived protein ingredient.

First, the plant milk suitably used for the improving agent of the present invention (hereinafter referred to as the plant milk of the present invention) will be described.

The plant milk is a paste-like or liquid food or food ingredient obtained by extracting, pressing, grinding, or pulverizing seeds, grains, or legumes, and often has a cloudy, milk-like appearance.

When the plant milk of the present invention is an extract, the solvent is water, and it is obtained by adding water to seeds, legumes, or grains, mixing, and then pureeing, grinding, or pulverizing the mixture before solid-liquid separation.

The ground liquid or pulverized liquid can be obtained by grinding or pulverizing seeds, legumes, or grains and adding water; in this case, either grinding or pulverizing or adding water may come first.

The plant milk used in the present invention may contain solids produced by grinding or pulverizing, or the solids may have been removed by filtration or the like. In addition, commercially available products may also be used.

Examples of seeds used as a raw material for the plant milk of the present invention include peanuts, hazelnuts, almonds, cashew nuts, macadamia nuts, pistachios, coconuts, sesame seeds, walnuts, and hemp seeds.

Examples of grains or legumes used as a raw material for the plant milk of the present invention include soybeans, adzuki beans, rice, barley, wheat, job's tears, rye, oats, buckwheat seeds, quinoa seeds, millet, sorghum, chickpeas, green peas, mung beans, broad beans, lentils, lupine seeds, kidney beans, chia seeds, sunflower seeds, pumpkin seeds, watermelon seeds, pine nuts, peach seeds, safflower seeds, and canola seeds.

In the present invention, from the viewpoint of imparting good richness to foods and drinks, it is preferable to use plant milk made from one or two or more selected from the group consisting of almonds, rice, oats, chickpeas, and green peas, it is more preferable to use plant milk made from one or two or more selected from the group consisting of almonds, oats, and rice, and it is even more preferable to use plant milk made from rice.

Note that in the production of the plant milk, it can also be produced using one having passed through at least any one step of a heat treatment by roasting, steaming, boiling, or the like and an enzyme treatment (for example, saccharification).

Although not limiting, the oil content in the plant milk is preferably, for example, 0.1 to 10% by mass from the viewpoint of more suitably demonstrating the effect of the present invention. From the same viewpoint, the protein content in the plant milk is preferably 0.1 to 10% by mass.

There is no particular restriction on the addition of water during the production of the plant milk of the present invention, and water can be added as appropriate in consideration of desired richness and physical properties and production efficiency, but in the state of plant milk, the water content is preferably 95% by mass or less, more preferably 94% by mass or less, and even more preferably 93% by mass or less.

Note that as the plant milk, a concentrated liquid of the plant milk or a processed liquid that has undergone an enzyme treatment, a fermentation treatment, a heat treatment, an acid treatment, or the like can be used. The enzyme treatment referred to here includes a saccharification treatment using rice malt or amylase.

From the viewpoint of making the richness-improving effect of the improving agent of the present invention stronger, the plant milk of the present invention is preferably a saccharified product or a fermented product, and when the fermented product is selected, it is desirably a lactic acid fermented product from the viewpoint of being used for various foods and drinks.

When the improving agent of the present invention contains the plant milk, the content of the plant milk is preferably 1 part by mass or more, more preferably 1.5 parts by mass or more, and even more preferably 2 parts by mass with respect to 1 part by mass of the brewing by-product contained in the improving agent of the present invention. The upper limit is preferably 30 parts by mass or less, more preferably 25 parts by mass or less, and even more preferably 20 parts by mass or less. Thus, in one embodiment, the content of the plant milk is preferably 1 to 30 parts by mass, more preferably 1.5 to 25 parts by mass, and even more preferably 2 to 20 parts by mass with respect to 1 part by mass of the brewing by-product contained in the improving agent of the present invention. This can impart and enhance even better richness for a wide range of foods and drinks, including plant-based foods.

Note that when a food or drink to which the improving agent of the present invention is applied is a plant milk, the presence or absence of the plant milk in the improving agent of the present invention does not matter, but if it is contained, it is preferable to use one made from the same type of plant as the target plant milk.

### <Form of Improving agent of Present Invention>

The form of the improving agent of the present invention is not limited to a particular form so long as it contains the brewing by-product and the olive oil in a specific ratio, and the continuous phase may be an oil phase or an aqueous phase.

### -About Improving agent in which Continuous Phase is Oil Phase-

In the present invention, the continuous phase of the improving agent of the present invention being the oil phase refers to that the improving agent of the present invention takes the form of a water-in-oil emulsion or an oil-in-water-in-oil emulsion such as margarine, fat spread, or butter, or an oil or fat composition containing little water such as shortening, powdered oil or fat, or liquid oil.

Note that when only the brewing by-product and the olive oil are contained in the above ratio, the continuous phase can actually be the oil phase because the olive oil forms the continuous phase, but in the improving agent of the present invention, "the continuous phase is the oil phase" refers to an oil phase containing the olive oil and oils and fats other than the olive oil as the continuous phase.

In the improving agent in which the continuous phase is the oil phase, the total value of the content of the brewing by-product and the olive oil is preferably 0.05 part by mass or more as a solid content in the improving agent of the present invention. The upper limit thereof is preferably 5 parts by mass or less, more preferably 4 parts by mass or less, even more preferably 3 parts by mass or less, and still even more preferably 2 parts by mass or less or 1 part by mass or less.

Thus, in one preferred embodiment, the total value of the content of the brewing by-product and the olive oil is preferably 0.05 to 5 parts by mass, more preferably 0.05 to 4 parts by mass, even more preferably 0.05 to 3 parts by mass, and still even more preferably 0.05 to 2 parts by mass or 0.05 to 1 part by mass as a solid content in the improving agent of the present invention. This can demonstrate the effect of the present invention more suitably in the improving agent in which the continuous phase is the oil phase.

Note that when the continuous phase is the oil phase, the improving agent of the present invention preferably has plasticity. Having plasticity facilitates the spread of the improving agent of the present invention through foods and drinks and makes it easier to obtain the effect of the present invention.

As to oils and fats used in the improving agent in which the continuous phase is the oil phase, any edible oils and fats other than olive oil can be used without any restrictions. Specifically, various plant oils and fats such as palm oil, palm kernel oil, coconut oil, corn oil, cottonseed oil, soybean oil, rapeseed oil (for example, rapeseed extremely hardened oil), rice oil (including rice germ oil), sunflower oil, safflower oil, peanut oil, capoc oil, sesame oil, evening primrose oil, cocoa fat, shea fat, mango kernel oil, sal fat, and illipe fat; various animal oils and fats such as beef fat, milk fat, pork fat, fish oil, and whale oil; and processed oils and fats made from these oils and fats and subjected to one or two or more treatments selected from hydrogenation, fractionation, and interesterification can be used.

Examples of processed oils and fats of palm oil or palm kernel oil include fractionated hard oils such as palm kernel stearin, fractionated soft oils such as palm olein and palm super olein, hydrogenated oils and fats such as palm extremely hardened oil, and their interesterified oils and fats. The interesterified oils and fats are preferably randomly interesterified oils and fats. Random interesterification can be performed in accordance with conventional methods, and either a method with a chemical catalyst or a method with an enzyme may be used.

From the viewpoint of satisfying the condition of the unsaponifiable matter content and favorably demonstrating the effect of the present invention, the unsaponifiable matter content in oils and fats used in the improving agent in which the continuous phase is the oil phase is preferably 0.1% by mass or more or 0.15% by mass or more, more preferably 1.5% by mass or more or 1.6% by mass or more, even preferably 1.8% by mass or more, and still even more preferably 2.0% by mass or more.

One of these oils and fats may be used alone or two or more may be used in combination, but from the viewpoint of favorably satisfying the condition for the content of the unsaponifiable matter, at least rice oil is preferably selected and used.

From the viewpoint of satisfying the condition for the content of the unsaponifiable matter and improving the workability of the improving agent of the present invention in which the continuous phase is the oil phase, the content of the rice oil, when contained, is preferably 25% by mass or more, more preferably 28% by mass or more, and even more preferably 32% by mass or more in the improving agent of the present invention. The upper limit thereof is preferably 50% by mass or less, more preferably 45% by mass or less, and even more preferably 40% by mass or less. Thus, in one embodiment, the content of the rice oil is preferably 25 to 50% by mass, more preferably 28 to 45% by mass, and even more preferably 32 to 40% by mass in the improving agent of the present invention.

In addition, it is preferable not to use soybean oil and rapeseed oil, which are liquid oils, so that the improving agent in which the continuous phase is the oil phase will not have an odd taste over time.

Note that it is preferable to use oils and fats that do not substantially contain trans fatty acids from the viewpoint of health effects. "Not substantially contain trans fatty acids" referred to here means that the content of trans fatty acids in the fatty acid residue composition in oils and fats is 5% by mass or less, more preferably 3% by mass or less, and even more preferably 2% by mass or less, and it is preferable not to use partially hardened oils.

In the improving agent in which the continuous phase is the oil phase, the content of oils and fats in the improving agent, including the olive oil and oils and fats in other ingredients described below, is preferably 50% by mass or more, more preferably 60% by mass or more, and even more preferably 70% by mass or more. The upper limit thereof is preferably 98% by mass or less, 96% by mass or less, or 95% by mass or less. Thus, in one preferred embodiment, the content of oils and fats in the improving agent of the present invention is preferably 50 to 98% by mass, more preferably 60 to 96% by mass, and even more preferably 70 to 95% by mass. This can demonstrate the effect of the present invention more suitably in the improving agent in which the continuous phase is the oil phase.

The following describes a method for producing the improving agent in which the continuous phase is the oil phase. The method for producing the improving agent is not limited to a particular method, and it may be produced using known methods.

The following illustrates a suitable example when the improving agent of the present invention in the form of a water-in-oil emulsion having plasticity, which is one preferred form, is produced.

Preferably, either (1) a mixed liquid prepared by preparing an aqueous phase containing the brewing by-product and an oil phase containing olive oil, and mixing and emulsifying them or (2) a mixed liquid prepared by preparing an oil phase containing the brewing by-product and the olive oil and an aqueous phase containing watersoluble other ingredients, and mixing and emulsifying them is cooled, whereby the improving agent in which the continuous phase is the oil phase can be obtained.

Note that when the improving agent of the present invention contains the plant milk, it is preferably contained in the aqueous phase.

Specifically, the oil phase and the aqueous phase are first mixed and emulsified to obtain an emulsion.

The mixing ratio of the oil phase to the aqueous phase is preferably 75:25 to 95:5 in terms of mass ratio (oil phase: aqueous phase).

The resulting emulsion is preferably subjected to a sterilization treatment.

The sterilization method may be a batch system in a tank or a continuous method using a plate type heat exchanger or a scraping type heat exchanger. The sterilization temperature is preferably 80 to 100°C, more preferably 80 to 95°C, and even more preferably 80 to 90°C. Then, if necessary, the emulsion subjected to the sterilization treatment is pre-cooled to the extent that oil and fat crystals do not precipitate.

The temperature of pre-cooling is preferably 40 to 60°C, more preferably 40 to 55°C, and even more preferably 40 to 50°C.

Next, cooling, preferably rapid cooling plasticization, is performed on the pre-cooled emulsion. This rapid cooling plasticization can be performed, for example, using a closed type continuous scraping tube chiller cooler (A unit) such as a Kombinator, Votator, Perfector, or Chemetator, or a plate type heat exchanger. In addition, cooling may also be performed by combining Diacooler and Complector as open type coolers.

By performing this rapid cooling plasticization, the improving agent in which the continuous phase is the oil phase having plasticity can be obtained. The endpoint temperature of plasticization is not limited to a particular temperature, and cooling may be performed until becoming 20°C or lower, preferably 15°C or lower, and more preferably 12°C or lower. The cooling rate is not limited to a particular cooling rate so long as it is possible to cool to the endpoint temperature, and is preferably 1 to 15°C/min, and more preferably 3 to 10°C/min. During rapid cooling plasticization, a kneading apparatus such as a pin machine (B unit), a resting tube, or a holding tube may also be used.

The resulting improving agent in which the continuous phase is the oil phase may be molded into any shape, for example, a sheet-like, block-like, cylindrical, or rectangular parallelepiped shape. Preferred sizes for each shape are as follows:
Sheet-like: 50 to 1,000 mm in length, 50 to 1,000 mm in width, and 1 to 50 mm in thickness
Block-like: 50 to 1,000 mm in length, 50 to 1,000 mm in width, and 50 to 500 mm in thickness
Cylindrical: 1 to 25 mm in diameter and 5 to 100 mm in length
Rectangular: 5 to 50 mm in length, 5 to 50 mm in width, and 5 to 100 mm in height.

In the production process of the improving agent of the present invention, nitrogen, air, or the like may be contained or is not necessarily contained.

Note that in preparing the oil phase, the brewing by-product and the olive oil may be mixed outside the system in advance to prepare the improving agent of the present invention, and then the improving agent may be dispersed and dissolved in the oil phase to newly prepare the improving agent of the present invention in which the continuous phase is the oil phase.

It is also possible to prepare the improving agent of the present invention in which the continuous phase is the oil phase by mixing the improving agent of the present invention prepared by mixing the brewing by-product and the olive oil outside the system in advance with a separately prepared oil or fat composition in which the continuous phase is the oil phase and that does not contain the improving agent of the present invention (for example, butter, margarine, or shortening).

### -About Improving agent in which Continuous Phase is Aqueous Phase-

In the present invention, the continuous phase of the improving agent being the aqueous phase refers to that the improving agent takes the form of an oil-in-water emulsion such as pure fresh cream, compound cream, plant cream, whipped cream, or milk, or an aqueous liquid.

Note that the aqueous liquid referred to here means, in addition to aqueous solutions, liquids in which the aqueous phase is the continuous phase, such as suspensions in which water-insoluble components are dispersed and oil-in-water emulsions in which a very small amount of oils and fats or oil-soluble components are dispersed.

In the improving agent in which the continuous phase is the aqueous phase, the total value of the content of the brewing by-product and the olive oil is preferably 0.05 part by mass or more as a solid content in the improving agent of the present invention. The upper limit thereof is preferably 5 parts by mass or less, more preferably 4 parts by mass or less, even more preferably 3 parts by mass or less, and still even more preferably 2 parts by mass or less or 1 part by mass or less. Thus, in one preferred embodiment, the total value of the content of the brewing by-product and the olive oil is preferably 0.05 to 5 parts by mass, more preferably 0.05 to 4 parts by mass, even more preferably 0.05 to 3 parts by mass, and still even more preferably 0.05 to 2 parts by mass or 0.05 to 1 part by mass as a solid content in the improving agent of the present invention.

As to oils and fats used in the improving agent in which the continuous phase is the aqueous phase, any edible oils and fats can be used without any restrictions. For example, the same ones as those described earlier in relation to the improving agent in which the continuous phase is the oil phase may be used. Similarly, oils and fats that do not substantially contain trans fatty acids are preferably used.

Note that from the viewpoint of favorably satisfying the condition for the content of the unsaponifiable matter, at least rice oil is preferably selected and used.

From the viewpoint of satisfying the condition for the content of the unsaponifiable matter and improving the workability of the improving agent of the present invention in which the continuous phase is the aqueous phase, the content of the rice oil, when contained, is preferably 25% by mass or more, more preferably 28% by mass or more, and even more preferably 32% by mass or more in the improving agent of the present invention. The upper limit thereof is preferably 50% by mass or less, more preferably 45% by mass or less, and even more preferably 40% by mass or less. Thus, in one embodiment, the content of the rice oil is preferably 25 to 50% by mass, more preferably 28 to 45% by mass, and even more preferably 32 to 40% by mass in the improving agent of the present invention in which the continuous phase is the aqueous phase.

In addition, it is preferable not to use soybean oil and rapeseed oil so that the improving agent in which the continuous phase is the aqueous phase will not have an odd taste over time.

In the improving agent in which the continuous phase is the aqueous phase, the content of oils and fats in the improving agent, including the olive oil and oils and fats in other ingredients described below, is preferably in a range of 0 to 60% by mass, more preferably in a range of 0 to 50% by mass, and even more preferably in a range of 0 to 40% by mass. This can demonstrate the effect of the present invention more suitably.

The following describes a method for producing the improving agent in which the continuous phase is the aqueous phase. The method for producing the improving agent is not limited to a particular method, and it may be produced using known methods. The following illustrates a suitable example when an improving agent in the form of an oil-in-water emulsion, which is one preferred form, is produced.

Note that the brewing by-product may be dissolved in the aqueous phase or dispersed in the oil phase, but the following describes a method of dissolving it in the aqueous phase. When the improving agent of the present invention in which the continuous phase is the aqueous phase contains the plant milk, it is preferably contained in the aqueous phase, and it is also possible to use the plant milk as the aqueous phase as it is.

Specifically, first, an oil phase obtained by heating and dissolving an oil or fat containing the olive oil and, as needed, containing other ingredients described below, and an aqueous phase containing the brewing by-product and, as needed, containing other ingredients described below are separately prepared.

Next, the oil phase and the aqueous phase are mixed and emulsified to emulsify them in an oil-in-water type to obtain the improving agent in which the continuous phase is the aqueous phase.

If necessary, this may be homogenized with a homogenizing apparatus such as a valve type homogenizer, a homo mixer, or a colloid mill at a pressure range of 0 to 100 MPa. If necessary, heat sterilization or a heat sterilization treatment such as UHT, HTST and pasteurization using direct heating methods such as an injection type or an infusion type, or indirect heating methods such as a plate type, a tubular type, or a scraping type, and heat sterilization or a heat sterilization treatment such as batch, retort, or microwave heating may be applied, or heating may be applied by a heating treatment such as an open flame. It may also be homogenized again, as needed, after heating. In addition, if necessary, cooling operations such as rapid cooling and slow cooling may be applied.

When the improving agent of the present invention takes the form of an aqueous liquid, a prepared aqueous phase containing the olive oil and the brewing by-product may be used as the improving agent of the present invention as it is, or the aqueous phase that has been subjected to homogenization, a heat sterilization treatment, or a cooling operation, as needed, may be used as the improving agent of the present invention.

Note that when the improving agent of the present invention is an oil-in-water emulsion, when preparing the oil phase, the improving agent of the present invention containing the olive oil and the brewing by-product may be prepared outside the system in advance, and then the improving agent may be dispersed or dissolved in the oil phase to newly prepare the improving agent of the present invention in which the continuous phase is the aqueous phase. When the improving agent of the present invention takes the form of an aqueous liquid, the improving agent of the present invention containing the olive oil and the brewing by-product may be prepared outside the system in advance, and then the improving agent may be dispersed in the aqueous phase to newly prepare the improving agent of the present invention as an aqueous liquid.

It is also possible to prepare the improving agent of the present invention in which the continuous phase is the aqueous phase by mixing the improving agent of the present invention prepared by mixing the brewing by-product and the olive oil outside the system in advance with a separately prepared oil or fat composition in which the continuous phase is the aqueous phase and that does not contain the improving agent of the present invention (for example, whipped cream or plant cream) or aqueous liquid.

### -Improving agent taking other Forms-

The improving agent of the present invention can consist only of the brewing by-product and the olive oil, or it can be a solid.

When the improving agent of the present invention consists only of the brewing by-product and the olive oil, it can be produced by mixing and stirring 1 part by mass of the brewing by-product and 1 to 15 parts by mass of the olive oil so as to become uniform in a container.

When the improving agent of the present invention is a solid, it can be produced by using an excipient in addition to the brewing by-products and the olive oil. Examples of the excipient that can be used include lactose, starch, dextrin, and silicon dioxide. The excipient can be mixed to be lump, granule, or powder form, or compressed and molded using a tableting apparatus.

### -About Preferred Form of Improving agent of Present Invention-

As described above, the improving agent of the present invention can be in any form such as a case in which the continuous phase is the oil phase, a case in which the continuous phase is the aqueous phase, a case in which it consists only of the brewing by-product and the olive oil, or a case in which it is a solid. However, the improving agent of the present invention is preferably one with the oil phase as the continuous phase because of being able to more demonstrate the richness-improving effect on foods and drinks.

### <Other Ingredients>

In any form, the improving agent of the present invention may contain other ingredients in addition to the olive oil and the brewing by-product, and preferably further ingredients containing the unsaponifiable matter such as the rice oil and the plant milk, to the extent that the effect of the present invention is not impaired.

Examples of the other ingredients include food ingredients and food additives such water, edible oils and fats other than the olive oil (preferably edible oils and fats other than the olive oil and the rice oil), sweeteners such as glucose, fructose, sucrose, maltose, and stevia, emulsifiers, starches, dextrins, dietary fiber, salt enhancers such as salt and potassium chloride, acidulants such as acetic acid, lactic acid, and gluconic acid, milk and dairy products such as milk, skimmed milk powder, casein, whey powder, skimmed milk concentrate, and protein-enriched whey, sweeteners such as stevia and aspartame, colorants such as β-carotene, caramel, and red yeast rice dye, antioxidants such as tocopherol and tea extract, plant proteins such as wheat protein and soy protein, eggs and various processed egg products such as whole eggs, egg yolks, enzyme-treated egg yolks, egg whites, and egg proteins, flavoring agents, seasonings, pH adjusters, food preservatives, shelf-life enhancers, fruit, fruit juice, coffee, nut pastes, spices, cacao mass, cocoa powder, grains, beans, vegetables, meat, and seafood. As the other ingredients, one or two or more selected out of these may be used.

Examples of the emulsifier include synthetic emulsifiers such as glycerin fatty acid esters, sorbitan fatty acid esters, sucrose fatty acid esters, sucrose isobutyric acetate, polyglycerin fatty acid esters, polyglycerin fused ricinoleate, propylene glycol fatty acid esters, calcium stearoyl lactate, sodium stearoyl lactylate, polyoxyethylene sorbitan monostearate, and polyoxyethylene sorbitan monoglyceride, and natural emulsifiers such as soy lecithin, egg yolk lecithin, soy lysolecithin, egg yolk lysolecithin, enzyme-treated egg yolk, and milk fat globule membrane. As the emulsifier, one or two or more selected out of these may be used.

Note that since the generation of odd tastes such as acidity may impair the effect of the present invention of improving the richness of foods and drinks, when the emulsifier is contained in the production of the improving agent of the present invention, the content of the emulsifier in the improving agent is preferably 1.2% by mass or less, more preferably 0.8% by mass or less, and even more preferably 0.4% by mass or less, with 0% by mass (that is, not being contained) being most preferable.

Note that sterols are not treated as the emulsifier in the present invention.

### <Food or Drink of Present Invention>

Next, the food or drink of the present invention will be described. The food or drink of the present invention is a food or drink containing the olive oil so as to be 1 to 15 parts by mass with respect to 1 part by mass of the brewing by-product. The details of the brewing by-product and the olive oil used in the production of the food or drink of the present invention are as described above, and the food or drink of the present invention is preferably produced using the improving agent of the present invention.

The food or drink of the present invention containing the olive oil so as to be 1 to 15 parts by mass with respect to 1 part by mass of the brewing by-product has improved richness compared to foods and drinks that do not contain the brewing by-product or the olive oil (that is, ordinary foods and drinks that do not correspond to the food or drink of the present invention), and enables richness to be felt more strongly.

The following describes the food or drink of the present invention produced using the improving agent of the present invention based on preferred forms.

The type of the food or drink of the present invention is not limited to a particular food or drink and can include various foods and drinks that are required to be improved by imparting and enhancing richness. Examples thereof include seasonings such as miso, soy sauce, mentsuyu(Japanese noodles soup base), sauce, pasta sauce, mayonnaise, and tomato ketchup; liquid foods such as curry roux, white sauce, miso soup, osuimono(Japanese clear soup), consommé soup, and potage soup; processed livestock products such as beef jerky, ham, sausage, and cheese; snacks such as potato chips and rice crackers, baked goods such as pies, puffs, donuts, cakes, crackers, cookies, hard biscuits, waffles, and scones; breads such as bread, sweet bread, butter roll, variety bread, French bread, Danish bread, and pastries; creams such as whipped cream and butter cream; and prepared foods such as fried foods, croquettes, gratin, pizza, fried rice, pilaf, meat buns, and gyoza, and these may be made into retort pouch foods, instant foods, or frozen foods.

In particular, the food or drink is preferably made with an oil or fat as one of the ingredients during production, and the food or drink of the present invention is preferably snacks, baked goods, breads, creams, and prepared foods.

Note that the food or drink of the present invention can be plant-based foods in which animal ingredients (meat, eggs and various processed egg products such as whole eggs, egg yolks, enzyme-treated egg yolks, egg whites, and egg proteins, milk and dairy products such as milk, skimmed milk powder, whey powder, skimmed milk concentrate, and butter) contained in foods and drinks are replaced with plant ingredients (legumes (soybean, green pea, chickpeas, broad beans, and the like), rice, grains, and the like, and their processed products).

It is known that foods and drinks containing animal ingredients have richness derived from animal ingredients, and that plant-based foods produced by simply substituting plant ingredients have relatively reduced richness; however, the present invention can produce plant-based foods with improved richness.

In particular, the effect of the present invention can be obtained more markedly when applied to foods and drinks that tend to be lacking in richness due to their low content of contained oils and fats.

From the viewpoint of obtaining the effect of the present invention markedly, the improving agent of the present invention can be applied to foods and drinks with an oil content of foods and drinks of preferably 20% by mass or less, and more preferably 18% by mass or less to make the food or drink of the present invention.

Of course, the improving agent of the present invention can be applied even if the oil content in foods and drinks exceeds 20% by mass.

The food or drink of the present invention can contain any food ingredients necessary for their production.

Examples of the food ingredients that can be contained in the food or drink of the present invention include food ingredients and food additives such as oils and fats other than the improving agent of the present invention, yeast, sweeteners such as white soft sugar, glucose, fructose, sucrose, maltose, and stevia, emulsifiers, starches, dextrins, dietary fiber, salt flavorings such as salt and potassium chloride, acid flavorings such as acetic acid, lactic acid, and gluconic acid, milk and dairy products such as milk, skimmed milk powder, casein, whey powder, skimmed milk concentrate, and protein-enriched whey, sweeteners such as stevia and aspartame, colorants such as β-carotene, caramel, and red yeast rice dye, antioxidants such as tocopherol and tea extract, plant proteins such as wheat protein and soy protein, eggs and various processed egg products such as whole eggs, egg yolks, enzyme-treated egg yolks, egg whites, and egg proteins, flavoring agents, seasonings, pH adjusters, food preservatives, shelf-life enhancers, fruit, fruit juice, coffee, seeds (for example, almond powder), nut pastes, spices, yeast foods, cacao mass, cocoa powder, grains (for example, rice, barley, and wheat), beans, vegetables (for example, onions and tomatoes), meat, and seafood. As the food ingredients when the food or drink of the present invention is produced, one or two or more selected out of these are used.

The content of the improving agent of the present invention in the food or drink of the present invention can be adjusted as appropriate in accordance with the type of foods and drinks to be improved in terms of richness, desired strength of richness, the form of the improving agent, and sometimes the taste of consumers, and the like, but it is preferably contained such that the total value of the content of the brewing by-product and the olive oil in foods and drinks is 0.01% by mass or more, it is more preferably contained in an amount of 0.05% by mass or more, and even more preferably contained in an amount of 0.1% by mass or more. Note that the upper limit is 100% by mass.

For example, when the food or drink of the present invention is snacks, the total value of the content of the brewing by-product and the olive oil is preferably contained in an amount of 0.01 to 3% by mass, more preferably contained in an amount of 0.05 to 2.5% by mass, and even more preferably contained in an amount of 0.1 to 2.0% by mass in the food or drink.

When the food or drink of the present invention is breads or baked goods, the total value of the content of the brewing by-product and the olive oil is preferably 0.01 part by mass or more, more preferably 0.05 part by mass or more, and even more preferably 0.1 part by mass or more with respect to 100 parts by mass of flours used in the production of breads or baked goods. The upper limit thereof is preferably 1 part by mass or less, more preferably 0.9 part by mass or less, and even more preferably 0.8 part by mass or less. Thus, in one embodiment, the total value of the content of the brewing by-product and the olive oil is preferably 0.01 to 1 part by mass, more preferably 0.05 to 0.9 part by mass, and even more preferably 0.1 to 0.8 part by mass with respect to 100 parts by mass of flours used in the production of breads or baked goods.

When the food or drink of the present invention is prepared foods, the total value of the content of the brewing by-product and the olive oil is preferably 0.005 part by mass or more, more preferably 0.01 part by mass or more, and even more preferably 0.02 part by mass or more with respect to 100 parts by mass of prepared foods. The upper limit thereof is preferably 1 part by mass or less, more preferably 0.8 part by mass or less, and even more preferably 0.6 part by mass or less. Thus, in one embodiment, the total value of the content of the brewing by-product and the olive oil is preferably 0.005 to 1 part by mass, more preferably 0.01 to 0.8 part by mass, and even more preferably 0.02 to 0.6 part by mass with respect to 100 parts by mass of prepared foods.

When the food or drink of the present invention is creams, the total value of the content of the brewing by-product and the olive oil in creams is preferably 0.1 to 3% by mass, more preferably 0.2 to 2.2% by mass, and even more preferably 0.3 to 1.5% by mass.

### [Examples]

Next, examples and comparative examples are given to describe the present invention in more detail, but these do not limit the present invention in any way.

### <Used Ingredients>

·Olive oil (extra virgin olive oil, acid value: 0.52, unsaponifiable matter content: 1.5% by mass, iodine value: 75 to 94)
·Soybean oil (unsaponifiable matter content: 0.58% by mass, extremely hardened oil)
·Rice oil (unsaponifiable matter content: 2.4% by mass)
·Palm oil (unsaponifiable matter content: 0.17% by mass)
·Palm super olein (iodine value: 63, unsaponifiable matter content: 0.17% by mass)
·Palm kernel stearin (iodine value: 245, unsaponifiable matter content: 1.0% by mass)
·Rapeseed extremely hardened oil (unsaponifiable matter content: 1.11% by mass)
·Randomly interesterified oil or fat A
   (An oil or fat obtained by randomly interesterifying a mixed oil or fat A obtained by mixing 75% by mass of palm kernel oil and 25% by mass of palm extremely hardened oil after heating and dissolving them each based on a normal method, unsaponifiable matter content: 0.8% by mass)
·Randomly interesterified oil or fat B
   (An oil or fat obtained by randomly interesterifying a mixed oil or fat B obtained by mixing 50% by mass of palm kernel oil and 50% by mass of palm extremely hardened oil after heating and dissolving them each based on a normal method, unsaponifiable matter content: 0.2% by mass)
·Randomly interesterified oil or fat C
   (An oil or fat obtained by randomly interesterifying a mixed oil or fat B obtained by mixing 65% by mass of palm oil and 35% by mass of palm extremely hardened oil after heating and dissolving them each based on a normal method, unsaponifiable matter content: 0.17% by mass)
·Randomly interesterified oil or fat D
   (An oil or fat obtained by heating and dissolving palm olein (iodine value: 55), and then randomly interesterifying it based on a normal method, unsaponifiable matter content: 0.17% by mass)
·Randomly interesterified oil or fat E
   (An oil or fat obtained by heating and dissolving palm super olein (iodine value: 63), and then randomly interesterifying it based on a normal method, unsaponifiable matter content: 0.17% by mass)
·Shortening A: "Premium Short CF" manufactured by Adeka Corporation (unsaponifiable matter content: 0% by mass)
·Brewing by-product A (sake lees): "Shuko no Hana (registered trademark)" manufactured by Riken Vitamin Co., Ltd. (water content: 5% by mass, the method of drying is the same as the method (3) out of the methods for drying a brewing by-product described above)
·Brewing by-product B (beer lees): "EverPro (registered trademark)-BR" manufactured by EverGrain Ingredients, LLC (water content: 10% by mass or less)
·Rice milk A (a plant milk as a saccharified product, made from rice): One prepared by the following method of production was used.

### (Method for Producing Rice Milk A)

Water in an amount of 78.02 parts by mass was heated to 60°C, and while stirring, 0.1 part by mass of α-amylase BAN 480L (manufactured by Novozymes) and 20.0 parts by mass of a rice powder (manufactured by Namisato Corporation, oil content: 1.0% by mass, protein content 6.5% by mass, potassium content 0.094% by mass, sodium content 0.001% by mass) were added to perform an enzymatic reaction until the degree of saccharification was 40%. Then, an inactivation treatment was performed at 90°C for 15 minutes, and then cooling to 5°C was performed to produce a rice saccharified product. To this, 1.5 parts by mass of rice oil, 0.26 part by mass of marine-derived potassium salt (Ocean Kali: manufactured by FC Chemical Co., Ltd., protein content 0% by mass, potassium content 52.2% by mass), and 0.12 part by mass of salt were mixed and emulsified to prepare a pre-emulsion, which was homogenized at a pressure of 3 MPa and then sterilized in a VTIS sterilizer (UHT sterilizer manufactured by Alfa Laval) at 140°C for 4 seconds, homogenized again at a pressure of 5 MPa, and cooled to 5°C to obtain the rice milk A (manufactured by Adeka Corporation, oil content: 1.7% by mass, protein content: 1.3% by mass, water content: 79.7% by mass).
·Rice Milk B (manufactured by At-Hand Co., Ltd., a plant milk as a fermented product, made from rice, oil content: 0.1% by mass, protein content: 0.5% by mass, water content: 82.7% by mass): "Fermented Rice Milk" manufactured by At-Hand Co., Ltd.
·Oat milk (a plant milk as a saccharified product, made from oats): One prepared by the following method of production was used.

### (Method for Producing Oat Milk)

Water in an amount of 90.76 parts by mass was heated to 60°C, and while stirring, 0.05 part by mass of α-amylase BAN 480L (manufactured by Novozymes), 0.1 part by mass of glucoamylase Amylase AG (manufactured by Novozymes), and 8.0 parts by mass of an oat powder (manufactured by Glanbia, oil content: 3.0% by mass, protein content 11.9% by mass, potassium content 0.330% by mass, sodium content 0.008% by mass) were added and held for 3 hours to perform an enzymatic reaction. Then, an inactivation treatment was performed at 90°C for 15 minutes, and then cooling to 5°C was performed to produce an oat saccharified product. To this, 1 part by mass of sunflower oil and 0.09 part by mass of salt were mixed and emulsified to prepare a pre-emulsion, which was homogenized at a pressure of 3 MPa and then sterilized in a VTIS sterilizer (UHT sterilizer manufactured by Alfa Laval Co.) at 140°C for 4 seconds, homogenized again at a pressure of 5 MPa, and cooled to 5°C to obtain an oat milk (oil content: 1.24% by mass, protein content: 0.95% by mass, potassium content: 0.026% by mass, sodium content: 0.036% by mass, water content: 91.4% by mass).
·Rice-derived unsaponifiable matter: "Riceterol Ester" manufactured by Tsuno Food Industrial Co., Ltd. (unsaponifiable matter content: 75% by mass)

### <Production of Improving agent >

### [Comparative Example 1]

To 94.3 parts by mass of olive oil heated to 55°C, 5.7 parts by mass of the brewing by-product A were added, which were mixed and stirred, and then cooled to 25°C to obtain an improving agent Cex-1.

The improving agent Cex-1 contains 16.5 parts by mass of the olive oil with respect to 1 part by mass of the brewing by-product, and has an unsaponifiable matter amount of 1.41% by mass.

### [Comparative Example 2]

Olive oil heated to 55°C was cooled to 25°C to obtain an improving agent Cex-2. The improving agent Cex-2 has an unsaponifiable matter amount of 1.41% by mass.

### [Comparative Example 3]

The brewing by-product A was used as an improving agent Cex-3.

### [Comparative Example 4]

The rice milk A was used as an improving agent Cex-4.

### [Example 1]

To 89.2 parts by mass of the olive oil heated to 55°C, 10.8 parts by mass of the brewing by-product A were added, which were mixed and stirred, and then cooled to 25°C to obtain an improving agent Ex-1.

The improving agent Ex-1 contains 8.2 parts by mass of the olive oil with respect to 1 part by mass of the brewing by-product, in which the amount of an unsaponifiable matter is 1.34% by mass.

### [Example 2]

To 76.7 parts by mass of the olive oil heated to 55°C, 23.3 parts by mass of the brewing by-product A were added, which were mixed and stirred, and then cooled to 25°C to obtain an improving agent Ex-2.

The improving agent Ex-2 contains 3.3 parts by mass of the olive oil with respect to 1 part by mass of the brewing by-product, in which the amount of an unsaponifiable matter is 1.15% by mass.

### [Example 3]

To 92 parts by mass of the olive oil heated to 55°C, 8 parts by mass of the brewing by-product A were added, which were mixed and stirred, and then cooled to 25°C to obtain an improving agent Ex-3.

The improving agent Ex-3 contains 11.5 parts by mass of the olive oil with respect to 1 part by mass of the brewing by-product, in which the amount of an unsaponifiable matter is 1.38% by mass.

### [Example 4]

To 67.3 parts by mass of the olive oil heated to 55°C, 8.2 parts by mass of the brewing by-product A and 24.5 parts by mass of the rice milk A were added, which were mixed and stirred, and then cooled to 25°C to obtain an improving agent Ex-4.

The improving agent Ex-4 contains 8.2 parts by mass of the olive oil, and contains 3.0 parts by mass of the rice milk A with respect to 1 part by mass of the brewing by-product, in which the amount of an unsaponifiable matter is 1.01% by mass.

### [Example 5]

To 67.3 parts by mass of the olive oil heated to 55°C, 8.2 parts by mass of the brewing by-product A and 24.5 parts by mass of the rice milk B were added, which were mixed and stirred, and then cooled to 25°C to obtain an improving agent Ex-5.

The improving agent Ex-5 contains 8.2 parts by mass of the olive oil, and contains 3.0 parts by mass of the rice milk B with respect to 1 part by mass of the brewing by-product, in which the amount of an unsaponifiable matter is 1.01% by mass.

### [Example 6]

To 67.3 parts by mass of the olive oil heated to 55°C, 8.2 parts by mass of the brewing by-product A and 24.5 parts by mass of the oat milk were added, which were mixed and stirred, and then cooled to 25°C to obtain an improving agent Ex-6.

The improving agent Ex-6 contains 8.2 parts by mass of the olive oil, and contains 3.0 parts by mass of the oat milk with respect to 1 part by mass of the brewing by-product, in which the amount of an unsaponifiable matter is 1.01% by mass.

### [Example 7]

58% by mass of the soybean oil, 36% by mass of the palm kernel stearin, and 6% by mass of the palm oil were mixed to obtain a mixed oil or fat A. To 83.9 parts by mass of this mixed oil or fat A, 0.82 part by mass of the olive oil was added to make an oil phase. To 15.08 parts by mass of water, 0.1 part by mass of salt and 0.1 part by mass of the brewing by-product A were mixed and dispersed to make an aqueous phase.

The resulting oil phase and aqueous phase were mixed and emulsified to obtain a water-in-oil pre-emulsion. This pre-emulsion was rapidly cooled and plasticized to 10°C at a cooling rate of -5°C/min to obtain an improving agent Ex-7 in which the continuous phase is the oil phase.

The improving agent Ex-7 contains 8.2 parts by mass of the olive oil with respect to 1 part by mass of the brewing by-product, in which the amount of an unsaponifiable matter is 0.61% by mass. The total value of the content of the brewing by-product A and the olive oil in the improving agent is 0.92 part by mass (with respect to 100 parts by mass of the improving agent; the same applies hereinafter.), and the oil content is 84.72% by mass.

### [Example 8]

45% by mass of the rice oil, 11% by mass of the palm super olein, 1% by mass of the rapeseed extreme hardened oil, 20% by mass of the randomly interesterified oil A, and 23% by mass of the randomly interesterified oil B were mixed to obtain a mixed oil or fat B. Production was performed in the same manner as in Example 7 except that this mixed oil or fat B was used to obtain an improving agent Ex-8 in which the continuous phase is the oil phase.

The improving agent Ex-8 contains 8.2 parts by mass of olive oil with respect to 1 part by mass of the brewing by-product, in which the amount of an unsaponifiable matter is 1.12% by mass. In the improving agent, the total value of the contents of the brewing by-product A and the olive oil is 0.92 part by mass, the content of the rice oil is 37.8 parts by mass, and the oil content is 84.72% by mass.

### [Example 9]

45% by mass of the rice oil, 11% by mass of the palm super olein, 10% by mass of the randomly interesterified oil A, 24% by mass of the randomly interesterified oil B, and 10% by mass of the randomly interesterified oil E were mixed to obtain a mixed oil or fat C. Production was performed in the same manner as in Example 7 except that this mixed oil or fat C was used to obtain an improving agent Ex-9 in which the continuous phase is the oil phase.

The improving agent Ex-9 contains 8.2 parts by mass of the olive oil with respect to 1 part by mass of the brewing by-product, in which the amount of an unsaponifiable matter is 1.06% by mass. In the improving agent, the total value of the content of the brewing by-product A and the olive oil is 0.92 part by mass, the content of the rice oil is 37.8 parts by mass, and the oil or fat content is 84.72% by mass.

### [Example 10]

35% by mass of the rice oil, 31% by mass of the palm super olein, 20% by mass of the randomly interesterified oil A, and 14% by mass of the randomly interesterified oil B were mixed to obtain a mixed oil or fat D. Production was performed in the same manner as in Example 7 except that this mixed oil or fat D was used to obtain an improving agent Ex-10 in which the continuous phase is the oil phase.

The improving agent Ex-10 contains 8.2 parts by mass of the olive oil with respect to 1 part by mass of the brewing by-product, in which the amount of an unsaponifiable matter is 0.92% by mass. In the improving agent, the total value of the content of the brewing by-product A and the olive oil is 0.92 part by mass, the content of the rice oil is 35 parts by mass, and the oil content is 84.72% by mass.

### [Example 11]

20% by mass of the rice oil, 4% by mass of the randomly interesterified oil C, and 76% by mass of the randomly interesterified oil D were mixed to obtain a mixed oil or fat E. Production was performed in the same manner as in Example 7 except that this mixed oil or fat E was used to obtain an improving agent Ex-11 in which the continuous phase is the oil phase.

The improving agent Ex-11 contains 8.2 parts by mass of the olive oil with respect to 1 part by mass of the brewing by-product, in which the amount of an unsaponifiable matter is 0.53% by mass. In the improving agent, the total value of the content of the brewing by-product A and the olive oil is 0.92 part by mass, the content of the rice oil is 20 parts by mass, and the oil content is 84.72% by mass.

### [Example 12]

10% by mass of the randomly interesterified oil A, 30% of the randomly interesterified oil C, and 60% by mass of the randomly interesterified oil D were mixed to obtain a mixed oil or fat F. Production was performed in the same manner as in Example 7 except that this mixed oil or fat F was used to obtain an improving agent Ex-12 in which the continuous phase is the oil phase.

The improving agent Ex-12 contains 8.2 parts by mass of the olive oil with respect to 1 part by mass of the brewing by-product, in which the amount of an unsaponifiable matter is 0.21% by mass. In the improving agent, the total value of the content of the brewing by-product A and the olive oil is 0.92 part by mass, and the oil content is 84.72% by mass.

### [Example 13]

Production was performed in the same manner as in Example 7 except that the mixed oil or fat B was used instead of the mixed oil or fat A and the brewing by-product B was used instead of the brewing by-product A to obtain an improving agent Ex-13 in which the continuous phase is the oil phase.

The improving agent Ex-13 contains 8.2 parts by mass of olive oil with respect to 1 part by mass of the brewing by-product, in which the amount of an unsaponifiable matter is 1.12% by mass. In the improving agent, the total value of the content of the brewing by-product A and the olive oil is 0.92 part by mass, and the oil content is 84.72% by mass.

### [Example 14]

95% by mass of the randomly interesterified oil or fat E and 5% by mass of the palm oil were mixed to obtain a mixed oil or fat G. To 81.6 parts by mass of this mixed oil or fat G, 0.67 part by mass of the olive oil and 0.33 part by mass of a rice-derived unsaponifiable matter were added to make an oil phase. To 16.9 parts by mass of water, 0.1 part by mass of salt, 0.1 part by mass of the brewing by-product A, and 0.3 part by mass of the rice milk A were mixed and dispersed to make an aqueous phase.

The resulting oil phase and aqueous phase were mixed and emulsified to obtain a water-in-oil pre-emulsion. This pre-emulsion was rapidly cooled and plasticized to 10°C at a cooling rate of -5°C/min to obtain an improving agent Ex-14 in which the continuous phase is the oil phase.

The improving agent Ex-14 contains 6.7 parts by mass of the olive oil, and contains 3.0 parts by mass of the rice milk with respect to 1 part by mass of the brewing by-product, in which the amount of an unsaponifiable matter is 0.65% by mass. In the improving agent, the total value of the content of the brewing by-product A and the olive oil is 0.77 part by mass, and the oil content is 82.27% by mass.

### <Study 1: Breads>

### <Production of Bread>

Using each of the prepared improving agents, bread was produced by the following method of production.

### (Method for Producing Bread Ex-1 to Ex-6 using Improving agents Ex-1 to Ex-6 and Bread Cex-1 to Cex-4 using Improving agents Cex-1 to Cex-4)

70 parts by mass of strong flour (product name "Camellia": manufactured by Nisshin Flour Milling Inc.), 3 parts by mass of white soft sugar, 3 parts by mass of fresh yeast, 0.1 part by mass of yeast food, and 40 parts by mass of water were put into a mixer bowl, and mixed using a hook at low speed for 2 minutes and at medium speed for 2 minutes to obtain pre-fermented dough. The kneading temperature was 24°C.

This pre-fermented dough was placed in a dough box, and subjected to pre-fermentation for 2 hours in a thermostatic chamber with a temperature of 28°C and 75% relative humidity. The endpoint temperature was 29°C.

This dough that has finished pre-fermentation was put into the mixer bowl again, and further 30 parts by mass of strong flour, 12 parts by mass of white soft sugar, 0.9 part by mass of salt, 15.8 parts by mass of the shortening A, and 23 parts by mass of water were added, which were subjected to full kneading mixing at low speed for 3 minutes and at medium speed for 3 minutes.

Then, 15.85 parts by mass of the shortening A and 0.15 part by mass of any one of the improving agents Ex-1 to Ex-6 or any one of the improving agents Cex-1 to 4 were put thereinto, and mixing was performed using a hook at low speed for 3 minutes and at medium speed for 4 minutes to obtain fully kneaded dough for bread. The kneading temperature for the resulting bread dough was 28°C.

After taking 20 minutes of floor time, the dough was divided and rounded to 380 g pieces. Next, after taking 15 minutes of bench time, one loaf of bread was placed in a mold for one-loaf bread, and final fermentation was performed for 40 minutes at 38°C and 85% relative humidity, and then it was placed in a fixed oven set at 180°C and baked for 25 minutes to obtain bread Ex-1 to Ex-6, bakery foods.

Note that bread produced in the same manner as in the bread containing the improving agents Ex-1 to Ex-6 and the improving agents Cex-1 to Cex-4 except that 16 parts by mass of the shortening A was added instead of 15.85 parts by mass of the shortening A and 0.15 part by mass of any one of the improving agent Ex-1 to Ex-6 or the improvers Cex-1 to Cex4 added after performing full kneading mixing was used as a control for the evaluation of the bread described below (This control was used also in the evaluation of bread Ex-7 to Ex-14 described below).

### (Method for Producing Bread Ex-7 to Ex-14 using Improving agents Ex-7 to Ex-14)

Bread was produced in the same manner as in the bread containing the improving agents Ex-1 to Ex-6 or the improving agents Cex-1 to Cex-4 except that 16 parts by mass of the improving agents Ex-7 to Ex-14 were added instead of 15.85 parts by mass of the shortening A and 0.15 part by mass of any one of the improving agents Ex-1 to Ex-6 or the improving agents Cex-1 to Cex-4 added after performing full kneading mixing to obtain bread Ex-7 to Ex-14 containing the improving agents Ex-7 to Ex-14.

### <Evaluation of Bread>

Twelve panelists ate slices of the above bread, which had been stored at 25°C for 24 hours after baking, sliced into 1.5 cm thick slices, and performed a taste evaluation for two items, "richness" and "sweetness," compared to the control. The evaluation was scored according to the following criteria, and the total score was used as an evaluation result. Note that the evaluation criteria of the panelists were aligned in advance.

The sum of the obtained grades is listed in Table 1 as follows: 54 to 60 points: +++, 44 to 53 points: ++, 36 to 43 points: +, 30 to 35 points: ±, 18 to 29 points: -, and 0 to 17 points: --. For richness, those with a rating of "±" or better were determined to be passed items.

### <<Evaluation Criteria: Richness>>

5 points: It is much stronger than control.
3 points: It is stronger than control.
1 point: It is slightly stronger than control.
0 point: It is equal to control or weaker than control.

### <<Evaluation Criteria: Sweetness>>

5 points: It is much improved compared to control.
3 points: It is improved compared to control.
1 point: It is slightly improved compared to control.
0 point: It is equal to control or weaker than control.

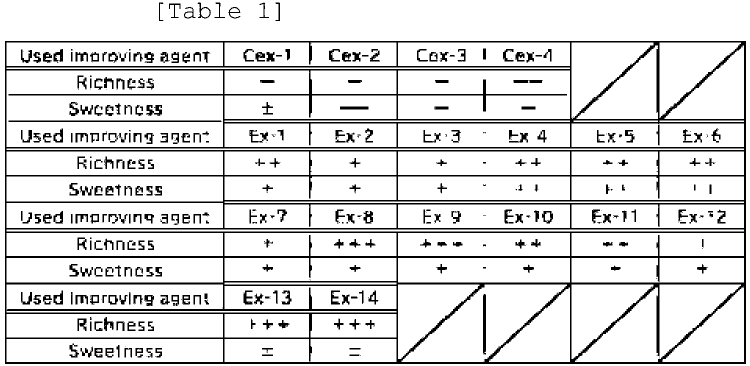

From the results of the study, it was confirmed that the richness of the food or drink was improved by containing the brewing by-product and the olive oil in a specific ratio. No improvement in richness was observed in the bread Cex-1, and the taste of the olive oil was simply enhanced.

In addition, in the bread Ex-4 to Ex-6, an improvement in taste was also observed along with an improvement in richness. On the other hand, in the bread Ex-6 made with the oat milk, a taste derived from the oat milk was imparted, and from the viewpoint of not imparting a taste derived from the improving agent, the rice milk was determined to be preferable.

Furthermore, for the improving agents Ex-7 to Ex-14 in which the continuous phase is the oil phase, it was confirmed that the degree of richness improvement varied depending on the oil or fat content of the oil phase, and in particular, a tendency of higher strength of richness was confirmed for those containing the improving agent containing a large amount of the rice oil.

Note that in the bread Ex-13, although an improvement in richness was observed, the cut surface (the crumb portion) was observed to be colored in brown.

### <Study 2: Baked Goods>

Using the improving agents Ex-7 to Ex-12 used in Study 1, baked goods were produced and evaluated as follows.

### <Production of Baked Goods (Snowball Cookies)>

Into a mixer bowl, 100 parts by mass of rice flour and 50 parts by mass of almond powder, which had been mixed and sifted in advance, 30 parts by mass of sugar, and 0.4 part by mass of salt were put and mixed. Then, 85 parts by mass of any one of the improving agents Ex-7 to Ex-12, which had been tempered to 15°C, were added and mixed at medium speed for 4 minutes to obtain baked goods dough.

The resulting baked goods dough was divided into 10 g portions, rounded, placed on a baking tray, and baked in an oven set at 160°C for 25 minutes to obtain baked goods Ex-7 to Ex-12.

Note that baked goods produced in the same manner except that the shortening A was used instead of the improving agents Ex-7 to Ex-12 were used as a control for this study.

### <Evaluation of Baked Goods>

After baking and storing at 25°C for 24 hours, 12 panelists ate the baked goods, and performed a flavor evaluation for "richness" compared to the control. The evaluation was scored according to the following criteria, and the total score was used as an evaluation result. Note that the evaluation criteria of the panelists were aligned in advance.

The sum of the obtained grades is listed in Table 2 as follows: 54 to 60 points: +++, 44 to 53 points: ++, 36 to 43 points: +, 30 to 35 points: ±, 18 to 29 points: -, and 0 to 17 points: --. Note that those with a rating of "±" or better were determined to be passed items.

### <<Evaluation Criteria: Richness>>

5 points: It is much stronger than control.
3 points: It is stronger than control.
1 point: It is slightly stronger than control.
0 point: It is equal to control or weaker than control.

**[Table 2]**

| **Used Improving agent** | **Ex-7** | **Ex-8** | **Ex-9** | **Ex-10** | **Ex-11** | **Ex-12** |
|---|---|---|---|---|---|---|
| **Richness** | **-** | **+++** | **++** | **+** | **+** | **+** |

The baked goods obtained using the improving agent of the present invention were all improved in richness compared to the control.

Note that some of the used improving agents were evaluated to have a reduced richness-improving effect compared to the evaluation of the breads. These results suggest that when the improving agent of the present invention contains an oil or fat, the strength and the like of richness may vary also depending on its oil or fat content.

### <Study 3: Prepared Foods>

Using the improving agents Ex-7 to Ex-12 used in Study 1, prepared foods were produced and evaluated as follows.

### <Production of Prepared Foods (Cooked Pilaf)>

First, 8 parts by mass of chopped onion and 0.2 part by mass of grated garlic were fried with 4 parts by mass of any one of the improving agents Ex-7 to Ex-12 used as cooking oil until the onion was cooked. White wine in an amount of 3 parts by mass was added to the mixture and heated over high heat to remove the alcohol content, and then the mixture was let cool down. Here, 0.7 part by mass of bouillon, 0.7 part by mass of salt, 0.2 part by mass of tomato paste, 0.02 part by mass of white pepper, and 83.20 parts by mass of water, which had been separately mixed, were added and mixed well to obtain cooked soups Ex-7 to Ex-12.

To 45 parts by mass of separately washed rice, 100 parts by mass of the cooked soups Ex-7 to Ex-12 were added and cooked using a rice cooker to obtain cooked pilafs Ex-7 to Ex-12.

Note that a cooked pilaf produced in the same manner except that rapeseed oil was used as cooking oil instead of any one of the improving agents Ex-7 to Ex-12 was obtained as a control.

### <Evaluation of Prepared Foods>

Twelve panelists ate 20 g of each of the resulting cooked pilafs, which were then wrapped in plastic wrap and formed by chakin shibori(a Japanese cooking technique involving wrapping and squeezing food to shape it), and performed a flavor evaluation for "richness" compared to the control. The evaluation was scored according to the following criteria, and the total score was used as an evaluation result. Note that the evaluation criteria of the panelists were aligned in advance.

The sum of the obtained grades is listed in Table 3 as follows: 54 to 60 points: +++, 44 to 53 points: ++, 36 to 43 points: +, 30 to 35 points: ±, 18 to 29 points: -, and 0 to 17 points: --. Note that those with a rating of "±" or better were determined to be passed items.

### <<Evaluation Criteria: Richness>>

5 points: It is much stronger than control.
3 points: It is stronger than control.
1 point: It is slightly stronger than control.
0 point: It is equal to control or weaker than control.

**[Table 3]**

| **Used Improving agent** | **Ex-7** | **Ex-8** | **Ex-9** | **Ex-10** | **Ex-11** | **Ex-12** |
|---|---|---|---|---|---|---|
| **Richness** | **±** | **+++** | **+++** | **++** | **++** | **±** |

The pilafs obtained using the improving agent of the present invention were all improved in richness compared to the control.

### <Study 4: Other Effects of Present Invention>

Koppepan (Japanese bread roll)containing a shelf-life enhancer were produced as follows using the improving agents Cex-2, Ex-1, Ex-2, Ex-7 to Ex-12, and Ex-14 used in Study 1, and evaluated for the presence or absence of acidity derived from the shelf-life enhancer and richness according to the following evaluation criteria.

Koppepans were produced by the following method of production.

70 parts by mass of strong flour (product name "Ocean": manufactured by Nisshin Flour Milling Inc.), 2.2 parts by mass of fresh yeast (product name "45 NEW Yeast": Yongo), 0.1 part by mass of yeast food, 0.3 part by mass of an emulsifier (product name "Panmak (registered trademark) 200V": manufactured by Riken Vitamin Co., Ltd.), and 40 parts by mass of water were put into a mixer bowl, and mixed using a hook at low speed for 3 minutes and at medium speed for 2 minutes to obtain pre-fermented dough. The kneading temperature was 26°C.

This pre-fermented dough was placed in a dough box, and subjected to pre-fermentation for 2 hours in a thermostatic chamber with a temperature of 28°C and 80% relative humidity. The endpoint temperature was 28°C.

This dough that has finished pre-fermentation was put into the mixer bowl again, and further 30 parts by mass of strong flour, 7 parts by mass of white soft sugar, 2 parts by mass of salt, 0.5 part by mass of a shelf-life enhancer (product name "Hi-Try (registered trademark) 700": manufactured by Mitsubishi Corporation Life Sciences Limited), and 23 parts by mass of water were added, which were subjected to full kneading mixing at low speed for 3 minutes and at medium speed for 3 minutes.

The shortening A and one of the improving agents Cex-2, Ex-1, Ex-2, Ex-7 to Ex-12, and Ex-14 were added, and mixing was performed using a hook at low speed for 3 minutes and at medium speed for 4 minutes to obtain fully kneaded dough for Koppepan. The kneading temperature for the resulting hot dog bun dough was 28°C.

After taking 30 minutes of floor time, the fully kneaded dough for Koppepan was divided and rounded into 70 g pieces. Then, after taking 20 minutes of bench time, they were formed into a roll form, subjected to final fermentation for 50 minutes at 38°C and 85% relative humidity, and then baked in a deck oven set at 200°C for upper heat and 190°C for lower heat for 10 minutes to obtain a hot dog bun Cex-2 and KoppepanEx-1, Ex-2, Ex-7 to Ex-12, and Ex-14.

Note that a hot dog bun produced in the same manner except that the shortening A was added instead of the improving agent added after performing full kneading mixing was used as a control for a sensory evaluation.

### <Evaluation of Koppepan>

Twelve panelists ate the resulting Koppepan, and performed a taste evaluation for "richness" and "acidity" compared to the control. The evaluation was scored according to the following criteria, and the total score was used as an evaluation result. Note that the evaluation criteria of the panelists were aligned in advance.

The sum of the obtained grades is listed in Table 3 as follows: 54 to 60 points: +++, 44 to 53 points: ++, 36 to 43 points: +, 30 to 35 points: ±, 18 to 29 points: -, and 0 to 17 points: --. Note that those with a rating of "±" or better were determined to be passed items.

### <<Evaluation Criteria: Richness>>

5 points: It is much stronger than control.
3 points: It is stronger than control.
1 point: It is slightly stronger than control.
0 point: It is equal to control or weaker than control.

### <<Evaluation Criteria: Acidity of Koppepans>>

5 points: It is much weaker than control.
3 points: It is weaker than control.
1 point: It is slightly weaker than control.
0 point: It is equal to control or stronger than control.

**[Table 4]**

| **Used improving agent** | **Cex-2** | **Ex-1** | **Ex-2** | **Ex-7** | **Ex-8** | **Ex-9** | **Ex-10** | **Ex-11** | **Ex-12** | **Ex-14** |
|---|---|---|---|---|---|---|---|---|---|---|
| **Richness** | **-** | **++** | **+** | **±** | **+++** | **+++** | **++** | **++** | **±** | **+++** |
| **Acidity** | **-** | **+** | **+** | **±** | **+++** | **++** | **++** | **++** | **±** | **+++** |

The results of Study 4 suggest a tendency that acidity is reduced and richness is enhanced in the Koppepans produced using the product of the present invention. These results suggest that the product of the present invention can enhance the richness of foods and drinks produced using the product of the present invention and reduce strange tastes such as acidity.

## Claims

1. A taste improving agent comprising olive oil in an amount of 1 to 15 parts by mass with respect to 1 part by mass of a brewing by-product.

2. The taste improving agent according to claim 1, wherein the brewing by-product is a brewing by-product of alcoholic drinks.

3. The taste improving agent according to claim 1 or 2, wherein the olive oil is unrefined olive oil.

4. The taste improving agent according to claim 1 or 2, wherein a content of an unsaponifiable matter is 0.2 to 3.5% by mass.

5. The taste improving agent according to claim 1 or 2, further comprising a plant milk.

6. A food or drink comprising olive oil in an amount of 1 to 15 parts by mass with respect to 1 part by mass of a brewing by-product.

7. The food or drink according to claim 6, wherein the food or drink is a plant-based food.

8. A method for improving flavor of a food or drink, the method comprising a step of including a brewing by-product and olive oil in a food or drink.
